# EUROPÄISCHE PATENTSCHRIFT

(11) **EP 2 268 441 B1**
(45) Veröffentlichungstag und Bekanntmachung des Hinweises auf die Patenterteilung: **22.03.2017**
(21) Anmeldenummer: 09737715.4
(22) Anmeldetag: 30.01.2009
(51) Int. Cl.: B23K 1/008

(54) **VORRICHTUNG UND VERFAHREN ZUR THERMISCHEN BEHANDLUNG VON WERKSTÜCKEN DURCH INSBESONDERE KONVEKTIVEN WÄRMEÜBERGANG**
DEVICE AND METHOD FOR THERMALLY TREATING WORKPIECES IN PARTICULAR BY CONVECTIVE HEAT TRANSFER
DISPOSITIF ET PROCÉDÉ DE TRAITEMENT THERMIQUE DE PIÈCES À USINER PAR TRANSFERT THERMIQUE NOTAMMENT PAR CONVECTION

(30) Priorität: 28.04.2008 DE 102008021240
(43) Veröffentlichungstag der Anmeldung: 05.01.2011
(73) Patentinhaber: Ersa GmbH, 97877 Wertheim (DE)
(72) Erfinder: KRESSMANN, Richard, 97299 Zell (DE); SCHÄFER, Michael, 97900 Külsheim (DE); STAHL, Johannes, 97877 Wertheim (DE); WOLPERT, Christoph, 97900 Külsheim (DE)
(74) Vertreter: advotec.
(86) Internationale Anmeldenummer: PCT/DE2009/000124
(87) Internationale Veröffentlichungsnummer: WO 2009/132607

(56) Entgegenhaltungen:
- JP-A- 2003 031 940
- JP-A- 2003 071 562
- US-A- 5 577 658
- US-A- 5 737 851

## Beschreibung

Die Erfindung betrifft eine Vorrichtung nach dem Oberbegriff des Anspruchs 1. Weiter betrifft die Erfindung ein Verfahren nach dem Oberbegriff des Anspruchs 13.

Vorrichtungen oder Anlagen der in Rede stehenden Art dienen zur thermischen Behandlung aller Art von Werkstücken, beispielsweise zur Härtung von Klebeverbindungen, thermischen Konditionierung für nachgeschaltete Bearbeitungsstationen oder dergleichen mehr. Insbesondere jedoch dienen derartige Vorrichtungen als Lötvorrichtungen oder Lötanlagen, insbesondere Reflow-Lötanlagen, für Leiterplatten oder andere Träger, die mit elektrischen oder elektronischen Bauteilen bestückt sind.

Dabei weisen die aus dem Stand der Technik bekannten Reflow-Lötanlagen regelmäßig mehrere nacheinander angeordnete Prozesskammer oder Prozesszonen unterschiedlicher Temperatur auf, insbesondere eine Vorheizzone, eine Reflowzone und eine Kühlzone, in denen die zu lötenden Leiterplatten unterschiedlichen Temperaturen ausgesetzt werden. Der Aufheizvorgang in jeder Zone erfolgt durch Heiz- bzw. Kühlelemente, deren Wärme mittels Lüftern in Richtung der Leiterplatten gefördert wird. Dabei erfolgt ein Anströmen der Leiterplatten in der Regel sowohl von oben als auch von unten. Der Wärmeübergang auf die Leiterplatten erfolgt im Wesentlichen konvektiv und hängt insbesondere von der Temperatur und den Strömungsbedingungen der erwärmten Luft ab.

Um eine hinreichende Prozessstabilität und damit zuverlässige und insbesondere wiederholbare Lötergebnisse zu erreichen, ist die Erfassung der Prozessparameter zur Steuerung bzw. Regelung der Vorrichtung von wesentlicher Bedeutung. Während dies für die Temperatur in der Prozesskammer oder Prozesszone vergleichsweise einfach ist, sind die Konvektionsbedingungen wie Strömungsverhältnisse schwierig zu erfassen, insbesondere da bekannte Strömungsmesser bzw. Anemometer nicht in Prozesskammern mit derart hohen Temperaturen, wie sie beim Reflow-Löten vorliegen, verwendet werden können.

Die JP 2003 071562 A offenbart eine Vorrichtung, bei der die Frischgaszuführung und Abgasauslassführung einer Reflow-Vorrichtung mittels eines Gebläses gesteuert werden kann, wobei hierzu die Temperatur eines Heizkörpers betrachtet wird.

Die JP 2003 031940 A beschreibt eine Vorrichtung zum Reflow-Löten, bei welcher mittels einer Transportvorrichtung eine Platine in einen Ofen eingebracht wird, um mittels einer Gaszuführung und Gasauslassvorrichtung beheizt zu werden.

Die US 5 577 658 A offenbart eine gattungsgleiche Reflow-Lötvorrichtung, bei der die zu behandelnden Werkstücke mittels eines Kühlgases nach der Aufheizung und dem Lötvorgang abgekühlt werden. Zur Aufbringung des Kühlgases wird eine klingenartige Düse vorgeschlagen. Der Lehre der Druckschrift dient dazu, Verunreinigungen durch das Kühlgas zu verringern, einen Reinigungsprozess der Kühlvorrichtung damit zu vermeiden und durch gezieltes lokales Abkühlen Energieverluste zu verringern.

Ausgehend von dem in US 5 737 851 A offenbarten Stand der Technik ist es die Aufgabe der vorliegenden Erfindung, eine Vorrichtung und ein Verfahren zur thermischen Behandlung von Werkstücken zu schaffen, mit der die Prozessstabilität in den Prozesskammern bzw. Prozesszonen der Vorrichtung ermittelt werden kann. Diese Aufgabe wird durch eine Vorrichtung nach der Lehre des Anspruchs 1 gelöst.

Vorteilhafte Ausgestaltungen der Erfindung sind Gegenstand der Unteransprüche.

Die gattungsgemäße Vorrichtung oder Anlage zur thermischen Behandlung von Werkstücken, insbesondere mit elektrischen und elektronischen Bauteilen bestückten Leiterplatten oder dergleichen, weist in für sich bekannter Weise mindestens eine Prozesskammer auf, in der mindestens eine Heiz- oder Kühlzone ausgebildet bzw. angeordnet ist, in die ein temperiertes gasförmiges Fluid einleitbar ist. Das Fluid kann dabei atmosphärische Luft, Schutzgas oder ein beliebiges Gas- oder Gasgemisch sein. Die zu behandelnden Werkstücke durchlaufen dabei die Heiz- oder Kühlzone, wobei ein insbesondere konvektiver Wärmeübergang zwischen den Werkstücken und dem temperierten Fluid stattfindet. In der Prozesskammer ist ferner mindestens ein Temperaturmesselement angeordnet.

Gattungsgemäß ist weiterhin mindestens ein Sensorelement definierter Masse vorgesehen, das derart in der Prozesskammer angeordnet ist, dass zwischen dem Sensorelement und dem Fluid ein konvektiver Wärmeübergang stattfindet. Die Temperatur des Sensorelementes ist hierbei vom Temperaturmesselement messbar.

Zunächst einmal bedeutet die Anordnung des Sensorelementes definierter Masse in der Prozesskammer, dass dieses in gleicher Weise wie die zu behandelnden Werkstücke einem konvektiven Wärmeübergang unterliegt. Dabei heizt sich das Sensorelement auf, bis es im Wesentlichen die Temperatur innerhalb der Prozesskammer angenommen hat.

Erfindungsgemäß ist eine Einrichtung vorgesehen, mit der das Sensorelement relativ zur Temperatur in der Prozesskammer kühlbar und/oder erwärmbar ist. D.h. das Sensorelement kann unabhängig von den Heiz- bzw. Kühleinrichtungen der Anlage von der zusätzlichen Einrichtung beheizt und/oder gekühlt werden.

Nach Erreichen des zuvor beschriebenen ersten Gleichgewichtszustandes wird das Sensorelement mittels der erfindungsgemäßen Einrichtung abgekühlt, bis ein zweiter Gleichgewichtszustand auf einem niedrigeren Temperaturniveau erreicht ist bzw. eine ausreichend niedrige Temperatur des Sensorelementes erreicht ist. Danach wird die Kühlung des Sensorelementes beendet und dieses heizt sich konvektiv wieder bis zum ersten Gleichgewichtszustand auf. Aus dem Temperaturverlauf der Temperatur des Sensorelementes, insbesondere dem Ansteigen der Temperatur nach dem Ende der Kühlung, können Rückschlüsse auf die Konvektion gezogen werden. Mit anderen Worten, je schneller der Temperaturanstieg erfolgt, desto besser ist die Konvektion. Durch einen Vergleich der Temperaturkurven aufeinander folgender Kühl- und Aufheizzyklen des Sensorelementes bzw. der jeweils aktuellen Temperaturkurve mit einer Referenzkurve können also Aussagen über die Konvektion innerhalb der Prozesskammer getroffen werden, insbesondere ob diese stabil ist oder sich im Prozessverlauf ändert.

Alternativ zum Abkühlen des Sensorelementes kann dieses mittels der erfindungsgemäßen Einrichtung auch erwärmt werden, bis ein zweiter Gleichgewichtszustand höherer Temperatur bzw. eine ausreichend hohe Temperatur des Sensorelementes erreicht ist, worauf dieses konvektiv bis zum ersten Gleichgewichtszustand abgekühlt wird. Aus dem Temperaturverlauf der Temperatur des Sensorelementes, insbesondere dem Sinken der Temperatur nach dem Ende des Aufheizens, können Rückschlüsse auf die Konvektion gezogen werden. Mit anderen Worten, je schneller das Abkühlen des Sensorelementes erfolgt, desto besser ist die Konvektion.

Die Anordnung des Temperaturmesselementes ist grundsätzlich beliebig, solange eine hinreichend genaue Messung der Temperatur des Sensorelementes gewährleistet ist. Nach einem bevorzugten Ausführungsbeispiel der Erfindung ist das Temperaturmesselement mittelbar oder unmittelbar im oder am Sensorelement angeordnet.

Beispielsweise kann das Temperaturmesselement auf der Oberfläche des Sensorelementes angeordnet, beispielsweise aufgeklebt, sein. Nach einem Ausführungsbeispiel der Erfindung jedoch weist das Sensorelement eine Ausnehmung auf, in der das Temperaturmesselement angeordnet ist. Diese Ausnehmung kann beispielsweise eine Vertiefung auf der Oberfläche oder aber eine Bohrung im Körper des Sensorelementes sein.

Die Art des Temperaturmesselementes ist grundsätzlich beliebig. So können Thermosensoren aller Art zur Anwendung gelangen, beispielsweise Thermoelemente, Halbleitersensoren, elektrische Widerstandssensoren oder dergleichen mehr.

Zahl und Anordnung der Sensorelemente sind ebenfalls grundsätzlich beliebig und hängen im Wesentlichen von der Zahl, Anordnung und Ausgestaltung der Prozesskammern ab. Vorzugsweise jedoch ist in jeder Prozesskammer mindestens ein Sensorelement angeordnet.

Wenn die Prozesskammer oder die Mehrzahl von Prozesskammern jeweils mehrere Heiz- und/oder Kühlzonen aufweist, ist nach einem weiteren bevorzugten Ausführungsbeispiel der Erfindung in jeder Heiz- oder Kühlzone jeder Prozesskammer mindestens ein Sensorelement angeordnet. Damit lässt sich für jede Temperaturzone jeder Prozesskammer die Prozessstabilität bestimmen.

Die Kühlung des Sensorelementes über die Kühleinrichtung kann auf grundsätzlich beliebige Weise erfolgen. So kann beispielsweise das Sensorelement mit einem beliebigen Kühlfluid, beispielsweise einem flüssigen oder gasförmigen Kühlmittel, besprüht oder umspült werden. Vorzugsweise jedoch wird als Kühlmittel Druckluft verwendet, die über mindestens einen Rohrleitungsabschnitt der Kühleinrichtung mittelbar oder unmittelbar an das Sensorelement geführt werden kann. In grundsätzlich gleicher Weise kann das Sensorelement beispielsweise durch Durchleitung eines heißen Fluids, insbesondere eines Heizgases, erwärmt werden.

Nach einem bevorzugten Ausführungsbeispiel der Erfindung weist das Sensorelement eine im Wesentlichen durchgehende Ausnehmung auf, die von dem Rohrleitungsabschnitt, durch den das Kühlmittel bzw. das Heizmittel geleitet wird, durchgriffen wird. Dadurch kann das Kühlmittel bzw. das Heizmittel in einfacher Weise zum Sensorelement geleitet werden und dieses kühlen bzw. erwärmen.

Nach einem weiteren Ausführungsbeispiel kann das Sensorelement im Wesentlichen muffenartig ausgebildet sein und zwei Rohrleitungsabschnitte für das Kühl- bzw. Heizfluid im wesentlichen fluiddicht miteinander verbinden. Bei dieser Ausgestaltung wird das Sensorelement selbst zu einem Teil der Kühl- bzw. Heizmittelleitung, wodurch insbesondere ein guter Wärmeübergang zwischen Sensorelement und Kühl- bzw.

Heizmittel und damit eine schnelle Abkühlung bzw. ein schnelles Aufheizen des Sensorelementes erfolgen kann.

Die Verbindung der Rohrleitungsabschnitte mit dem Sensorelement kann durch ein beliebiges kraft- oder formschlüssiges Verbinden erfolgen, beispielsweise durch Kleben, Schweißen, Einpressen oder dergleichen. Vorzugsweise jedoch sind die zu verbindenden Rohrleitungsabschnitte an ihren axialen Enden mit einem Außengewinde versehen, und das muffenartige Sensorelement weist kragenseitig dazu form- und funktionskomplementäre Innengewinde auf. Damit können die Rohrabschnitte in einfacher Weise nach Art bekannter Rohrmuffenverschraubungen miteinander verbunden werden.

Von wesentlicher Bedeutung für die Erfindung ist, dass durch das Kühlen bzw. Aufheizen des Sensorelementes die Temperatur in der Prozesskammer bzw. Prozesszone der Prozesskammer in möglichst geringem Umfang beeinflusst wird. Dazu ist es von Vorteil, wenn das Kühlmittel und insbesondere die als Kühlmittel verwendete Druckluft bzw. das Heizmittel in einem im Wesentlichen geschlossenen Lauf durch die Prozesskammer geführt wird und nicht in die Atmosphäre der Prozesskammer gelangt. Nach einem besonders bevorzugten Ausführungsbeispiel der Erfindung sind daher alle Sensorelemente mittels der Rohrleitungsabschnitte unter Bildung eines gegenüber der Prozesskammer im Wesentlichen geschlossenen Kühl- bzw. Heizsystems miteinander verbunden. Eine besonders zuverlässige und genaue Messung der Temperatur des Sensorelementes ergibt sich, wenn nach einem weiteren Ausführungsbeispiel der Erfindung das Temperaturmesselement im Mantel des muffenförmigen Sensorelementes, insbesondere in einer Bohrung, die im Wesentlichen parallel zur Muffenlängsachse verläuft, angeordnet ist.

Die Erfindung betrifft ferner ein im Anspruch 13 beanspruchtes Verfahren zur Bestimmung der thermischen Prozessstabilität in einer Vorrichtung zur thermischen Behandlung von Werkstücken, insbesondere mit elektrischen und elektronischen Bauteilen bestückten Leiterplatten oder dergleichen. Dabei durchlaufen die Werkstücke mindestens eine Prozesskammer, in der mindestens eine Heiz- oder Kühlzone ausgebildet bzw. angeordnet ist, in die ein temperiertes gasförmiges Fluid einleitbar ist. In der Prozesskammer ist dabei mindestens ein Sensorelement definierter Masse angeordnet. Weiter findet ein konvektiver Wärmeübergang zwischen den Werkstücken und dem temperierten Fluid statt. Das erfindungsgemäße Verfahren weist dabei folgende Verfahrensschritte auf:
- Zunächst erfolgt ein konvektives Aufheizen des Sensorelementes in der Atmosphäre der Prozesskammer bis zu einem Gleichgewichtszustand, in dem das Sensorelement im Wesentlichen die Temperatur der Atmosphäre innerhalb der Prozesskammer aufweist.
- Anschließend erfolgt ein wiederholtes Abkühlen und Aufheizen des Sensorelementes, wobei das Abkühlen bei im Wesentlichen unveränderter Temperatur der Prozesskammer und das Aufheizen durch Konvektion in der Atmosphäre der Prozesskammer erfolgt, oder, alternativ, das Aufheizen bei im Wesentlichen unveränderter Temperatur der Prozesskammer und das Abkühlen durch Konvektion in der Atmosphäre der Prozesskammer erfolgt.
- Danach werden die Temperaturkurven des Sensorelementes aus aufeinander folgenden Aufheiz- und Abkühlzyklen miteinander bzw. die aktuelle Temperaturkurve mit einer Referenzkurve verglichen.

Dabei kann insbesondere aus der Veränderung der Temperatur des Sensorelementes eine Aussage über die Prozessstabilität in der Prozesskammer getroffen werden. Steigt beispielsweise die Temperatur des Sensorelementes in aufeinander folgenden Aufheiz- und Abkühlzyklen in gleicher Weise, das heißt insbesondere gleich schnell, an, so liegt eine ausreichende Prozessstabilität vor. Steigt die Temperatur in nachfolgenden Zyklen beispielsweise langsamer an, ist die Konvektion verschlechtert. Durch die Ermittlung derartiger Temperaturzyklen kann also in einfacher Weise indirekt eine Aussage über die Konvektion erhalten werden.

Im Folgenden wird die Erfindung anhand lediglich ein Ausführungsbeispiel zeigender Zeichnungen näher erläutert. Es zeigen:
- **Fig. 1**: in schematischer blockdiagrammartiger Darstellung eine Reflow-Lötanlage gemäß der Erfindung;
- **Fig. 2**: eine Sensorelementanordnung gemäß der Erfindung in einer Reflow-Lötanlage ähnlich Fig. 1 mit sechs Prozesszonen in vergrößerter Darstellung;
- **Fig. 3**: ein Temperatur-Zeit-Diagramm aufeinander folgender Aufheiz- und Abkühlzyklen eines Sensorelementes; und
- **Fig. 4**: in schematischer blockdiagrammartiger Darstellung ein Steuerungs- oder Regelsystem einer erfindungsgemäßen Vorrichtung.

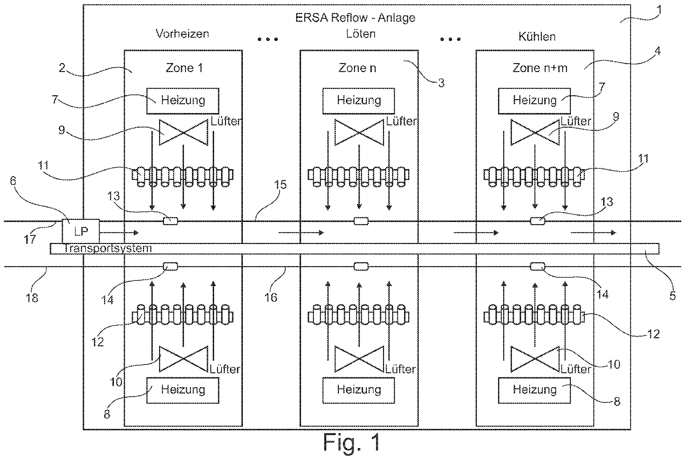

Die in der Fig. 1 dargestellte Reflow-Lötanlage weist eine Prozesskammern 1 mit einer Vielzahl von Prozesszonen auf, von denen lediglich drei Prozesszonen, nämlich eine Vorheizzone 2, eine Lötzone 3 und eine Kühlzone 4 dargestellt sind. Die Prozesszonen sind voneinander durch entsprechende nicht dargestellte Trenneinrichtungen, beispielsweise Trennwände oder dergleichen, derart getrennt, dass zwischen den Prozesszonen ein Temperaturausgleich verhindert wird.

Auf einer Transporteinrichtung in Form einer Förderband- oder Förderketteneinrichtung 5 werden die zu lötenden Leiterplatten 6 derart durch die Vorrichtung transportiert, dass die Prozesszonen 2 bis 4 nacheinander durchlaufen werden.

Jede Prozesszone weist oberhalb und unterhalb der Transporteinrichtung jeweils eine Heizeinrichtung 7, 8 auf, mittels der die in der Prozesszone befindliche Atmosphäre erwärmt wird. Mittels Lüftern 9, 10 wird das so erwärmte Prozessfluid, beispielsweise Luft oder Schutzgas, durch Verteilerdüsen 11, 12 auf die Leiterplatten 6 geblasen, wodurch diese erwärmt oder gekühlt werden, wobei zumindest in der Prozesszone 3 im Bereich der Leiterplatten 6 eine Temperatur herrscht, die zumindest geringfügig über der Schmelztemperatur des verwendeten Lotes liegt. Die Übertragung der Wärme vom Prozessfluid auf die Leiterplatten erfolgt dabei im Wesentlichen durch Konvektion.

In jeder Prozesszone 2, 3 und 4 ist im Bereich zwischen oberer Heizeinrichtung 7 und der Transporteinrichtung 5 beziehungsweise unterer Heizeinrichtung 8 und der Transporteinrichtung 5 jeweils ein Sensorelement 13 bzw. 14 angeordnet. Die oberen Sensorelemente 13 und die unteren Sensorelemente 14 sind über Rohrleitungsabschnitte 15 bzw. 16, durch die bei Bedarf Druckluft durch die Sensorelemente geführt wird, verbunden. An beiden Enden der Vorrichtung sind die Rohrleitungsabschnitte nach außen geführt und zumindest im Einlassbereich 17, 18 der Vorheizzone 2 mit einer nicht dargestellten Duckluftquelle verbunden.

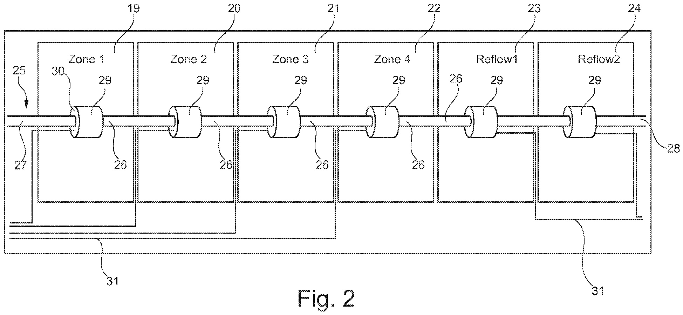

In Fig. 2 ist eine Sensoranordnung in einer Vorrichtung mit sechs Prozesszonen dargestellt. Die Prozesszonen 19 bis 22 betreffen dabei Vor- bzw. Aufheizzonen und entsprechen der Prozesszone 2 in Fig. 1. Die Prozesszonen 23 und 24 stellen Reflow-Lötzonen dar und entsprechen insofern der Prozesszone 3 nach Fig. 1. Es ist ferner eine Rohrleitung 25 aus den Rohrleitungsabschnitten 26 und dem Rohreinlassabschnitt 27 sowie dem Rohrauslassabschnitt 28 vorgesehen. Der Rohreinlassabschnitt ist mit einer nicht dargestellten Druckluftquelle verbunden.

In jeder Prozesszone ist ein Sensorelement 29 vorgesehen. Die Sensorelemente 29 sind als muffenartiger rohrabschnittförmiger Hohlzylinder ausgebildet. Dabei ist jedes Sensorelement 29 im Bereich seiner beiden kragenseitigen Enden mit einem nicht dargestellten Innengewinde versehen, in das die stirnseitigen Enden der Rohrabschnitte 26, 27 und 28, die ein komplementäres Außengewinde aufweisen, eingeschraubt sind. Auf diese Art und Weise wird ein fluiddichtes, durch die muffenartigen Sensorelemente verschraubtes Rohrsystem erhalten, durch das Druckluft zum Kühlen der Sensorelemente geleitet werden kann.

Im Bereich ihrer Stirnseiten 30 sind die Sensorelemente 29 mit einer nicht dargestellten Bohrung versehen, die im Mantel des Sensorelementes im Wesentlichen parallel zur Muffenlängsachse ausgebildet ist. In dieser Bohrung ist jeweils ein Temperaturmesselement angeordnet, das zur Ermittlung der Temperatur des Sensorelementes dient. Das nicht dargestellte Temperaturmesselement ist über eine elektrische Leitung 31 mit einer in der Fig. 1 nicht dargestellten Mess- und Auswerteinheit für das Signal des Temperaturmesselementes versehen. Temperaturmesselement und elektrische Leitung 31 sind bei sämtlichen Sensorelementen gleich ausgebildet.

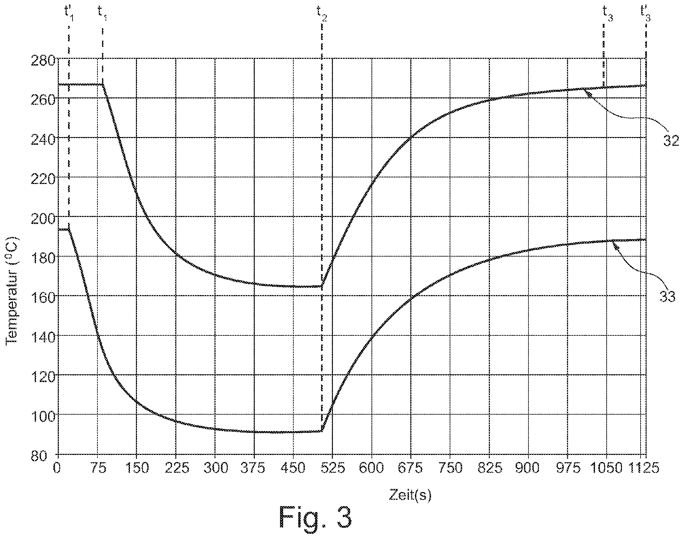

Der Temperaturverlauf eines Sensorelementes wird nachfolgend anhand der oberen Kurve 32 des Diagramms nach Fig. 3 beschrieben:
Zum Zeitpunkt t₁ weist das Sensorelement 29 eine Temperatur auf, die der Prozesstemperatur in der jeweiligen Prozesszone entspricht. Es herrscht ein Gleichgewichtszustand. Ab dem Zeitpunkt t₁ wird das Sensorelement mittels Druckluft, die durch die Rohrleitungsabschnitte und das Sensorelement geblasen wird, gekühlt, bis zum Zeitpunkt t₂ wiederum ein Gleichgewichtszustand, in dem das Sensorelement seine niedrigste Temperatur erreicht hat, bzw. eine ausreichend niedrige Temperatur des Sensorelementes erreicht ist. Die Atmosphärentemperatur in der Prozesszone hingegen bleibt nahezu unverändert, da zum einen die Druckluft nicht in die Prozessatmosphäre gelangt und zum anderen die gekühlten Massen der Rohrleitungsabschnitte und Sensorelemente im Vergleich zur Größe der Prozesszone klein sind.

Zum Zeitpunkt t2 wird die Zufuhr von Druckluft gestoppt und das Sensorelement heizt sich konvektiv auf, bis zum Zeitpunkt t₃ wiederum der Gleichgewichtszustand zum Zeitpunkt t₁ erreicht ist.

Das Abkühlen und Wiederaufheizen des Sensorelementes wie vorstehend beschrieben wird nun während des Betriebes der Prozesszone beliebig oft wiederholt. Im Diagramm nach Fig. 3 ist mit der Kurve 33 der Temperaturverlauf des gleichen Sensorelementes in einem nachfolgenden Kühl- und Aufheizzyklus dargestellt. Zur leichteren Darstellung ist die Kurve 33 gegenüber der Kurve 32 nach unten versetzt dargestellt; realiter sind die absoluten Temperaturen im Bereich der Gleichgewichtszustände zu den Zeiten t₁ bzw. t₁', t₂ und t₃ bzw. t₃' der beiden Diagrammverläufe gleich hoch. Vergleicht man nun den durch die Konvektion verursachten Temperaturanstieg nach dem Zeitpunkt t2 der beiden Kurven 32 und 33, stellt man fest, dass der Anstieg der Kurve 33 deutlich flacher ist als der Anstieg der Kurve 32. Dies bedeutet mit anderen Worten, dass der konvektive Wärmeübergang im Zyklus, der der Kurve 33 zugrunde liegt, schlechter ist als der konvektive Wärmeübergang im vorausgehenden Zyklus der Kurve 32. Somit kann in einfacher Weise eine Veränderung der Konvektion und damit eine Prozessinstabilität ermittelt werden.

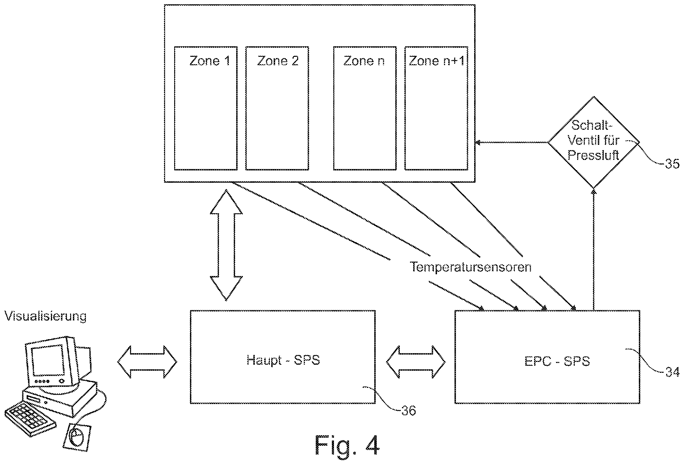

Wie insbesondere aus der Fig. 4 ersichtlich ist, werden die Signale der Sensorelemente der unterschiedlichen Prozesszonen einer erfindungsgemäßen Vorrichtung einer Auswerte- und Steuereinheit 34 zugeführt und dort verarbeitet wie vorstehend beschrieben. Über diese Auswerte- und Steuereinheit erfolgt zudem ein periodisches An- und Abschalten eines Schaltventils 35 zur Zuführung der Druckluft, mit dem der zyklische Kühlvorgang der Sensorelemente eingeleitet und beendet wird.

Das Ergebnis des Vergleichs der Temperaturverläufe aufeinander folgender Aufheiz- und Abkühlzyklen der Sensorelemente wird einer Hauptsteuereinheit 36 zugeführt, das in Abhängigkeit von den ermittelten unterschiedlichen Temperaturverläufen beispielsweise Heizung und/oder Lüfter der jeweiligen Prozesszonen oder aber die Durchlaufgeschwindigkeit der Transporteinrichtung für die Leiterplatten regelt.

## Patentansprüche

1. Vorrichtung zur thermischen Behandlung von Werkstücken, insbesondere mit elektrischen und elektronischen Bauteilen bestückten Leiterplatten oder dergleichen, mit mindestens einer Prozesskammer, in der mindestens eine Heiz- oder Kühlzone ausgebildet oder angeordnet ist, in die ein temperiertes gasförmiges Fluid einleitbar ist, welches mit zumindest einer Heizeinrichtung heizbar ist, wobei die Werkstücke die Heiz- oder Kühlzone durchlaufen und ein konvektiver Wärmeübergang zwischen den Werkstücken und dem temperierten Fluid stattfindet, und mit mindestens einem in der Prozesskammer angeordneten Temperaturmesselement, umfassend mindestens ein Sensorelement definierter Masse, das derart in der Prozesskammer angeordnet ist, dass zwischen dem Sensorelement und dem Fluid ein konvektiver Wärmeübergang stattfindet, wobei die Temperatur des Sensorelements vom Temperaturmesselement messbar ist, **gekennzeichnet durch**
eine von der zumindest einen Heizeinrichtung unabhängigen Einrichtung, mit der das Sensorelement kühlbar und/oder erwärmbar ist.

2. Vorrichtung nach Anspruch 1,
**dadurch gekennzeichnet,**
**dass** das Temperaturmesselement im oder am Sensorelement angeordnet ist.

3. Vorrichtung nach Anspruch 2,
**dadurch gekennzeichnet,**
**dass** das Sensorelement eine Ausnehmung aufweist, in der das Temperaturmesselement angeordnet ist.

4. Vorrichtung nach einem der Ansprüche 1 bis 3,
**dadurch gekennzeichnet,**
**dass** das Temperaturmesselement ein Thermosensor ist.

5. Vorrichtung nach einem der Ansprüche 1 bis 4,
**dadurch gekennzeichnet,**
**dass** in jeder Prozesskammer mindestens ein Sensorelement angeordnet ist.

6. Vorrichtung nach einem der Ansprüche 1 bis 5,
**dadurch gekennzeichnet,**
**dass** in jeder Heiz- oder Kühlzone jeder Prozesskammer mindestens ein Sensorelement angeordnet ist.

7. Vorrichtung nach einem der Ansprüche 1 bis 6,
**dadurch gekennzeichnet,**
**dass** die Einrichtung zum Kühlen oder Erwärmen des Sensorelementes mindestens einen Rohrleitungsabschnitt aufweist, durch den das Kühlfluid, insbesondere in Form von Druckluft, und/oder das Heizfluid mittelbar oder unmittelbar an das Sensorelement geführt werden kann.

8. Vorrichtung nach Anspruch 7,
**dadurch gekennzeichnet,**
**dass** das Sensorelement eine durchgehende Ausnehmung aufweist, die von dem Rohrleitungsabschnitt durchgriffen wird.

9. Vorrichtung nach Anspruch 7,
**dadurch gekennzeichnet,**
**dass** das Sensorelement muffenartig ausgebildet ist und zwei Rohrleitungsabschnitte für das Kühlfluid und/oder Heizfluid fluiddicht miteinander verbindet.

10. Vorrichtung nach Anspruch 9,
**dadurch gekennzeichnet,**
**dass** die zu verbindenden Rohrleitungsabschnitte an ihren axialen Enden mit einem Außengewinde versehen sind und das muffenartige Sensorelement kragenseitig mit dazu form- und funktionskomplementären Innengewinden versehen ist.

11. Vorrichtung nach einem der Ansprüche 7 bis 10,
**dadurch gekennzeichnet,**
**dass** alle Sensorelemente mittels der Rohrleitungsabschnitte unter Bildung eines gegenüber der Prozesskammer geschlossenen Kühl- und/oder Heizsystems miteinander verbunden sind.

12. Vorrichtung nach einem der Ansprüche 7 bis 11,
**dadurch gekennzeichnet,**
**dass** das Temperaturmesselement im Mantel des muffenförmigen Sensorelementes, insbesondere in einer Bohrung, die parallel zur Muffenlängsachse verläuft, angeordnet ist.

13. Verfahren zur Bestimmung der thermischen Prozessstabilität in einer Vorrichtung zur thermischen Behandlung von Werkstücken, insbesondere mit elektrischen und elektronischen Bauteilen bestückten Leiterplatten oder dergleichen, wobei die Werkstücke mindestens eine Prozesskammer, in der mindestens eine Heiz- oder Kühlzone ausgebildet oder angeordnet ist, in die ein temperiertes gasförmiges Fluid einleitbar ist, durchlaufen, mindestens ein Sensorelement definierter Masse in der Prozesskammer angeordnet ist und wobei ein konvektiver Wärmeübergang zwischen den Werkstücken und dem temperierten Fluid stattfindet, mit dem folgenden Verfahrenschritt:
- konvektives Aufheizen des Sensorelementes in der Atmosphäre der Prozesskammer, **gekennzeichnet durch** die folgenden Verfahrenschritten :
- wiederholtes Abkühlen und Aufheizen des Sensorelementes, wobei das Abkühlen bei im Wesentlichen unveränderter Temperatur der Prozesskammer und das Aufheizen **durch** Konvektion in der Atmosphäre der Prozesskammer erfolgt, oder das Aufheizen bei im Wesentlichen unveränderter Temperatur der Prozesskammer und das Abkühlen **durch** Konvektion in der Atmosphäre der Prozesskammer erfolgt;
- Vergleich der Temperaturkurven des Sensorelementes aus aufeinander folgenden Aufheiz- und Abkühlzyklen und/oder der jeweils aktuellen Temperaturkurve mit einer Referenzkurve.

## Claims

1. A device for thermally treating workpieces, in particular printed circuit boards or the like that are equipped with electrical and electronic components, comprising at least one process chamber in which at least one heating or cooling zone is formed or disposed, wherein a temperature-controlled gaseous fluid, which is heated by at least one heating device, can be introduced into said heating or cooling zone, wherein the workpieces pass through the heating or cooling zone and heat is transferred in a convective manner between the workpieces and the temperature-controlled fluid, and comprising at least one temperature measuring element disposed in the process chamber, comprising at least one sensor element that has a defined mass and is disposed in the process chamber such that heat is convectively transferred between the sensor element and the fluid, wherein the temperature of the sensor element can be measured by the temperature measuring element.
**characterised by**
an apparatus being independent of the at least one heating device, the sensor element being able to be cooled and/or heated by means of said apparatus.

2. The device according to claim 1,
**characterised in that**
the temperature measuring element is disposed within or at the sensor element.

3. The device according to claim 2,
**characterised in that**
the sensor element features a recess having the temperature measuring element disposed therein.

4. The device according to any one of claims 1 to 3,
**characterised in that**
the temperature measuring element is a thermo-sensor.

5. The device according to any one of claims 1 to 4,
**characterised in that**
at least one sensor element is disposed in each process chamber.

6. The device according to any one of claims 1 to 5,
**characterised in that**
at least one sensor element is disposed in each heating or cooling zone of each process chamber.

7. The device according to any one of claims 1 to 6,
**characterised in that**
the apparatus for cooling or heating the sensor element features at least one tube section through which the cooling fluid, in particular in the form of compressed air, and/or the heating fluid can be directly or indirectly conducted to the sensor element.

8. The device according to claim 7,
**characterised in that**
the sensor element features a continuous recess which is penetrated by the tube section.

9. The device according to claim 7,
**characterised in that**
the sensor element has an essentially sleeve-like shape and connects two tube sections provided for the cooling fluid and/or the heating fluid in a fluid-tight manner.

10. The device according to claim 9,
**characterised in that**
the tube sections to be connected are each equipped with an external thread at their axial ends, and the sleeve-like sensor element at its collar side is equipped with internal threads being complementary in shape and function to the external threads.

11. The device according to any one of claims 7 to 10,
**characterised in that**
all sensor elements are connected to one another by means of the tube sections while forming a cooling and/or heating system closed with respect to the process chamber.

12. The device according to any one of claims 7 to 11,
**characterised in that**
the temperature measuring element is disposed in the cladding of the sleeve-shaped sensor element, in particular in a bore which extends in parallel to the longitudinal axis of the sleeve.

13. A method for determining the thermal process stability in a device for thermally treating workpieces, in particular printed circuit boards or the like that are equipped with electrical and electronic components, wherein the workpieces pass through at least one process chamber in which at least one heating or cooling zone is formed or disposed, wherein a temperature-controlled gaseous fluid can be introduced into said heating or cooling zone, at least one sensor element that has a defined mass is disposed in the process chamber, and wherein heat is convectively transferred between the workpieces and the temperature-controlled fluid, comprising the following method step of:
- convectively heating the sensor element in the atmosphere of the process chamber, **characterised by** the following method steps of:
- repeatedly cooling and heating the sensor element, wherein cooling is performed at a substantially unchanged temperature of the process chamber and heating is performed by convection in the atmosphere of the process chamber, or heating is performed at a substantially unchanged temperature of the process chamber and cooling is performed by convection in the atmosphere of the process chamber;
- comparing the temperature curves of the sensor element derived from successive heating and cooling cycles and/or comparing the respectively current temperature curve with a reference curve.

## Revendications

1. Dispositif pour le traitement thermique de pièces à usiner, en particulier de circuits imprimés ou similaires équipés de composants électriques et électroniques, ayant au moins une chambre de traitement, dans laquelle au moins une zone de chauffage ou de refroidissement est formée ou disposée, un fluide gazeux tempéré pouvant être introduit dans ladite zone, ledit fluide gazeux tempéré pouvant être chauffé par au moins un dispositif de chauffage, lesdites pièces à usiner traversant la zone de chauffage ou de refroidissement et un transfert thermique par convection ayant lieu entre les pièces à usiner et le fluide tempéré, et ayant au moins un élément de mesure de température disposé dans la chambre de traitement, comprenant au moins un élément capteur d'une masse définie qui est disposé dans la chambre de traitement de telle manière qu'un transfert thermique par convection ait lieu entre l'élément capteur et le fluide, la température de l'élément capteur pouvant être mesurée par l'élément de mesure de température,
**caractérisé par**
un dispositif indépendant dudit au moins un dispositif de chauffage, l'élément capteur pouvant être refroidi et/ou chauffé au moyen dudit dispositif indépendant.

2. Dispositif selon la revendication 1,
**caractérisé en ce que**
l'élément de mesure de température est disposé dans ou à l'élément capteur.

3. Dispositif selon la revendication 2,
**caractérisé en ce que**
l'élément capteur comprend un évidement, dans lequel l'élément de mesure de température est disposé.

4. Dispositif selon l'une quelconque des revendications 1 à 3,
**caractérisé en ce que**
l'élément de mesure de température est un capteur thermique.

5. Dispositif selon l'une quelconque des revendications 1 à 4,
**caractérisé en ce qu'**
au moins un élément capteur est disposé dans chaque chambre de traitement.

6. Dispositif selon l'une quelconque des revendications 1 à 5,
**caractérisé en ce qu'**
au moins un élément capteur est disposé dans chaque zone de chauffage ou de refroidissement de chaque chambre de traitement.

7. Dispositif selon l'une quelconque des revendications 1 à 6,
**caractérisé en ce que**
le dispositif pour refroidir ou chauffer l'élément capteur comprend au moins une section de conduite, le fluide de refroidissement, en particulier en forme d'air comprimé, et/ou le fluide de chauffage pouvant être amené(s) directement ou indirectement à l'élément capteur à travers ladite section de conduite.

8. Dispositif selon la revendication 7,
**caractérisé en ce que**
l'élément capteur comprend un évidement continu, qui est traversé par la section de conduite.

9. Dispositif selon la revendication 7,
**caractérisé en ce que**
l'élément capteur est en forme de manchon et lie deux sections de conduite pour le fluide de refroidissement et/ou le fluide de chauffage l'une à l'autre de manière étanche aux fluides.

10. Dispositif selon la revendication 9,
**caractérisé en ce que**
les sections de conduite à être liées sont pourvues d'un filetage extérieur à leurs extrémités axiales, et l'élément capteur en forme de manchon, du côté de sa collerette, est pourvu de filetages intérieurs étant complémentaires aux filetages extérieurs en forme et en fonction.

11. Dispositif selon l'une quelconque des revendications 7 à 10,
**caractérisé en ce que**
tous les éléments capteurs sont liés les uns aux autres au moyen des sections de conduite en formant un système de refroidissement et/ou de chauffage fermé par rapport à la chambre de traitement.

12. Dispositif selon l'une quelconque des revendications 7 à 11,
**caractérisé en ce que**
l'élément de mesure de température est disposé dans le revêtement de l'élément capteur en forme de manchon, en particulier dans un perçage qui s'étend parallèlement à l'axe longitudinal du manchon.

13. Procédé pour déterminer la stabilité de traitement thermique dans un dispositif pour le traitement thermique de pièces à usiner, en particulier de circuits imprimés ou similaires équipés de composants électriques et électroniques, les pièces à usiner traversant au moins une chambre de traitement, dans laquelle au moins une zone de chauffage ou de refroidissement est formée ou disposée, un fluide gazeux tempéré pouvant être introduit dans ladite zone, au moins un élément capteur d'une masse définie étant disposé dans la chambre de traitement et un transfert thermique par convection ayant lieu entre les pièces à usiner et le fluide tempéré, comprenant l'étape de procédé suivante :
- chauffer l'élément capteur par convection dans l'atmosphère de la chambre de traitement, **caractérisée par** les étapes de procédé suivantes :
- refroidir et chauffer l'élément capteur à plusieurs reprises, le procédé de refroidissement se déroulant à une température essentiellement inchangée de la chambre de traitement et le procédé de chauffage se déroulant par convection dans l'atmosphère de la chambre de traitement ou le procédé de chauffage se déroulant à une température essentiellement inchangée de la chambre de traitement et le procédé de refroidissement se déroulant par convection dans l'atmosphère de la chambre de traitement ;
- comparer les courbes de température de l'élément capteur de cycles de chauffage et de refroidissement successifs et/ou comparer chaque courbe de température actuelle avec une courbe de référence.
